(19) Europäisches Patentamt
European Patent Office
Office européen des brevets

(11) **EP 2 922 417 B1**

(12) **EUROPEAN PATENT SPECIFICATION**

(45) Date of publication and mention
of the grant of the patent:
**01.04.2020 Bulletin 2020/14**

(51) Int Cl.:
*A23L 2/02* *(2006.01)*  *A23L 2/385* *(2006.01)*
*C12G 3/02* *(2019.01)*  *A23L 2/38* *(2006.01)*
*C12G 3/025* *(2019.01)*  *A23L 2/08* *(2006.01)*

(21) Application number: **13798580.0**

(22) Date of filing: **22.11.2013**

(86) International application number:
**PCT/EP2013/003545**

(87) International publication number:
**WO 2014/079584 (30.05.2014 Gazette 2014/22)**

(54) **FERMENTATION OF JUICE**

FERMENTIERUNG VON SAFT

FERMENTATION DE JUS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.11.2012 EP 12007875**

(43) Date of publication of application:
**30.09.2015 Bulletin 2015/40**

(73) Proprietor: **ADM WILD Europe GmbH & Co. KG
69214 Eppelheim (DE)**

(72) Inventors:
• **KELLER, Christine**
**68723 Schwetzingen (DE)**
• **SAß, Matthias**
**68723 Oftersheim (DE)**
• **CHATARD, Dominique**
**69121 Heidelberg (DE)**
• **DÖHR, Marcel**
**67354 Römerberg (DE)**
• **DONHOWE, Erik**
**Hebron KY 41048 (US)**
• **DE WITH, Axel**
**68723 Plankstadt (DE)**

(74) Representative: **Grünecker Patent- und
Rechtsanwälte
PartG mbB
Leopoldstraße 4
80802 München (DE)**

(56) References cited:
**EP-A1- 0 390 687      EP-A1- 2 412 251
EP-A1- 2 641 962      WO-A1-2009/016758
WO-A1-2012/066176      DE-A1-102008 018 608
DE-C- 735 007      FR-A- 908 079
US-A- 3 120 441      US-A- 4 695 468
US-B1- 6 689 401**

• **Benigno Ortiz-Mu?iz ET AL: "Kinetic study on
ethanol production using Saccharomyces
cerevisiae ITV-01 yeast isolated from sugar cane
molasses", Journal of Chemical Technology &
Biotechnology, vol. 85, no. 10, 9 September 2010
(2010-09-09), pages 1361-1367, XP055160348,
ISSN: 0268-2575, DOI: 10.1002/jctb.2441**

Remarks:
The file contains technical information submitted after
the application was filed and not included in this
specification

## Description

The present invention relates to a process of preparing a concentrated liquid foodstuff with low alcohol content.

The fermentation of sugar into alcohol in the presence of yeast for the preparation of alcoholic beverages is known since a very long time. Already in the middle age people prepared alcoholic drinks, such as wine, by fermentation of grape juice. For such fermentation, yeasts are used. Overall, sugars, such as glucose, fructose and sucrose are converted into cellular energy and thereby produce ethanol and carbon dioxide as metabolic byproducts. Since this conversion is performed in the absence of oxygen, ethanol fermentation is classified as anaerobic.

However, the beverages produced in that manner contain considerable amounts of alcohol. Since alcoholic drinks are not suitable for different groups of people, fermented beverages not containing alcohol are of interest.

US 4,695,468 describes a process for producing carbonated beverages comprising the fermentation of a sugar solution containing a liquid flavor extract and having a ph of 3.5 or lower in the presence of a yeast and continuing fermentation until the ph level drops to 3.0 or lower. However, to obtain satisfactory fermentation, it is required to add a yeast nutrient.

IT 1264292 describes a non-alcoholic drink comprising a fermented mixture of plants substances. In the process described therein a diluted fruit juice is used for fermentation.

JP 2001-190251 describes the fermentation of fruit juices, wherein the content of fruit juice is from 0.01 to 75 wt%. However, said document also uses only diluted fruit juices and is silent about the fermentation of concentrated fruit juices.

US 3,120,441 discloses a process for the production of fermented natural flavoured carbonated beverages from the juices of plant matter, which are substantially free of any alcohol.

Furthermore, it is quite common in the USA to ferment lemon. Fermented lemon juice is called "Skeeter Pee" (http://skeeterpee.com). However, Skeeter Pee is an alcoholic beverage containing from about 5 to 10% of alcohol. Furthermore, as described in the Skeeter Pee recipe, lemon juice is diluted with water and then fermented. In order to obtain sufficient fermentation, yeast nutrients and the yeast energizers are added.

It is an object of the present invention to provide a process for the preparation of a concentrated liquid foodstuff with a good taste and flavor and having a low alcohol content.

Said object is solved by a process according to claim 1.

Further embodiments are set forth in the subclaims 2 to 11.

Description of the figures

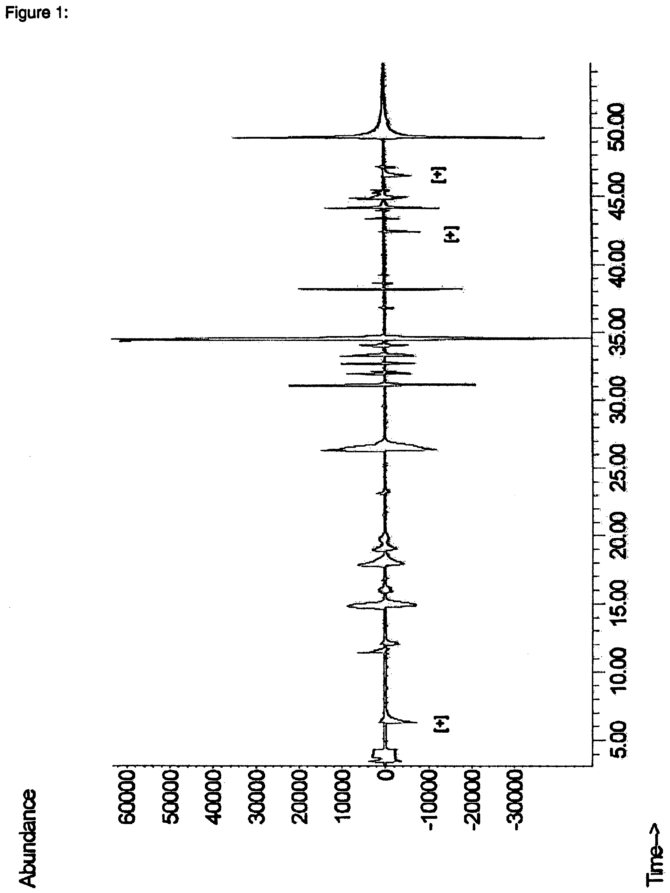

Figure 1 shows a GC MS of the starting material (upper curve) and of the fermented product (lower curve) of Example 1. GC MS was recorded with Agilent GC-System 6890N incl. 5975 MSD, Gerstel MPS2 autosampler; Column: INNOWAX 60m (0.25 mm i.D, thickness 0.25 $\mu$m); Carrier gas: Helium; Methode: SPME Headspace-Extraction, subsequent GC/MS.

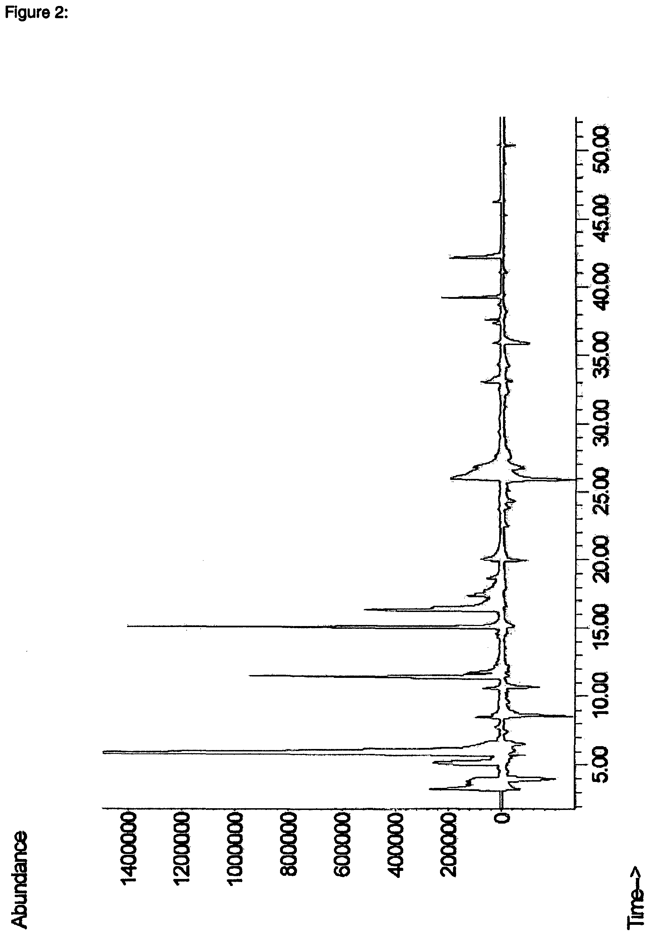

Figure 2 shows a GC MS of the starting material (lower curve) and of the fermented product (upper curve) of Example 2. GC MS was recorded with Agilent GC-System 6890N incl. 5975 MSD, Gerstel MPS2 autosampler; Column: INNOWAX 60m (0.25 mm i.D, thickness 0.25 $\mu$m); Carrier gas: Helium; Methode: SPME Headspace-Extraction, subsequent GC/MS.

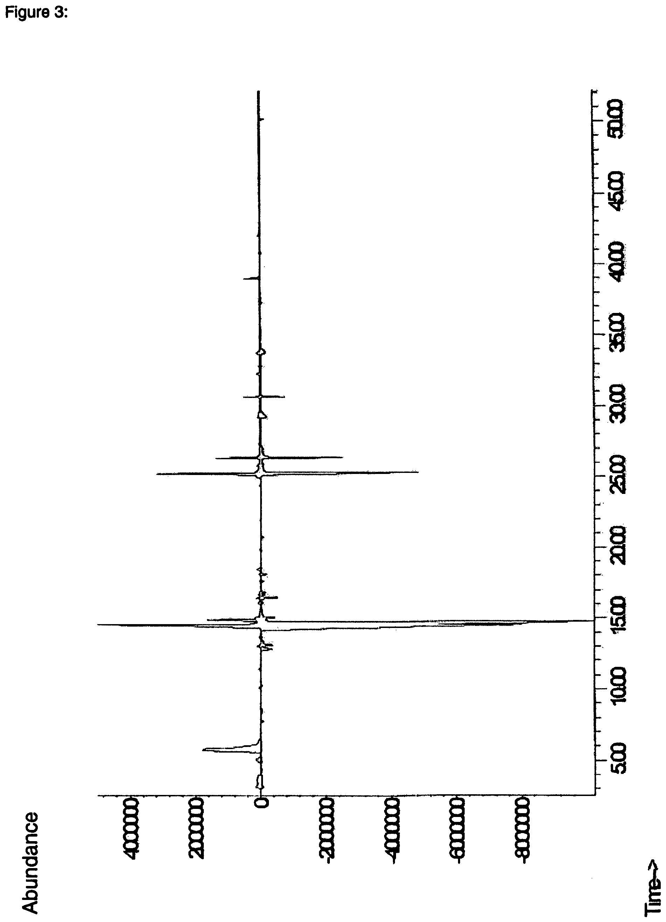

Figure 3 shows a GC MS of the starting material (lower curve) and of the fermented product (upper curve) of Example 3. GC MS was recorded with Agilent GC-System 6890N incl. 5975 MSD, Gerstel MPS2 autosampler; Column: INNOWAX 60m (0.25 mm i.D, thickness 0.25 $\mu$m); Carrier gas: Helium; Methode: SPME Headspace-Extraction, subsequent GC/MS.

The term "concentrated liquid foodstuff" refers to a liquid foodstuff, which is concentrated. For consumption, the concentrated liquid foodstuff according to the invention has to be diluted. The concentrated liquid foodstuff cannot be consumed as such due to its high acidity.

The term "°Bx" (degrees Brix) refers to a unit representing the soluble solid content in a solution. One degree Brix corresponds to 1 gram of saccharose in 100 grams of saccharose/water solution and thus represents the concentration of the solution as a percentage by weight (% w/w). A solution has 1 °Bx if the density of said solution is the same as a solution of 1 gram of saccharose in 100 grams of saccharose/water solution. The °Bx is usually measured by means of a refractometer.

The term "juice concentrate" refers to a concentrate obtainable by selective removal of water from juice, until the amount of water remaining in the concentrate is from 20 to 80 % by weight based on the juice concentrate. The juice is obtained from fruits, berries, vegetables, herbs, nuts, spices, fungi, cereals, or crop products by pressing, squeezing, or extracting. The term "extracting" is used representatively for an extraction with a solvent, such as maceration or percolation. The production of juice concentrates is a common practice and well-known by the person skilled in the art. It can be carried out by any process resulting in a higher Brix value of the juice after the process. Examples for common concentration methods are filtration and evaporation. The terms "juice concentrate" also refers to water extracted soluble solids, comminutes and purees. The juice concentrate may also be a mixture of different juice concentrates.

Suitable fruits are, for example apple, passion fruit, pear, peach, plum, apricot, nectarine, grape, cherry, lemon, lime, mandarin, tangerine, orange, grapefruit, tomato, cucumber, pineapple, pomegranate, kiwi, mango, papaya, banana, watermelon, cantaloupe, acerola, blood orange, carob, cherimoya, citrus, dragonfruit, fig, guave, honeydew melon, kaki, lychee, mangosteen, melon, mirabelle, olive, paprika, physalis, prickly pear, pumpkin, quince, starfruit and mixtures thereof.

Suitable berries are, for example, cranberry, currant, raspberry, gooseberry, blackberry, blueberry, strawberry, acai, aronia berry, black currant, boysenberry, elderberry, goji, lingonberry, mulberry, red and black currant, rosehip, rowan berry, sea buckthorn, sloe, whitethorn and wood berries and mixtures thereof.

Suitable vegetables are, for example, potato, lettuce, celery, spinach, cabbage, watercress, rhubarb, carrot, beet, asparagus, beetroot, broccoli, endive, fennel, horseradish, leek, onion, pea and spinach and mixtures thereof.

Suitable herbs are, for example, dandelion, aloe vera, fennel, ginkgo, green tee, hibiscus, mallow, rooibos, leaves and tea and mixtures thereof.

Suitable nuts are, for example, coconut, chestnut, almond, cashew, hazelnut, macadamia, peanut, pecan, pine nut, pistachio, walnut and mixtures thereof.

Suitable spices are, for example, cinnamon, ginger, liquorice and vanilla and mixtures thereof.

Suitable cereals are, for example, barley, flaxseed, bran, maize, millet, oat, rice, rye, wheat, corn and malt and mixtures thereof.

Suitable crop products are, for example, beans, cacao, cassia, coffee, ginseng, guarana, honey, lenses, lotus, poppy seed, sunflower, soy, and tamarind and mixtures thereof.

The juice concentrate used in the process according to the present invention may be any juice concentrate obtained from fruits, berries, vegetables, herbs, nuts, spices, fungi, cereals, or crop products mentioned above.

In a preferred embodiment in combination with any of the embodiments described above or below, the juice concentrate is selected from citrus fruits, such as lemon, lime, mandarin, tangerine, orange, grapefruit, blood orange or mixtures thereof. More preferably, the juice concentrate is selected from lemon, lime, or mixtures thereof. In particular, the juice concentrate is selected from lime.

The juice concentrate has a Brix of from 5 to 20 °Bx. In a preferred embodiment in combination with any of the embodiments described above or below, the juice concentrate used in the process according to the present invention has a Brix of from 6 to 16 °Bx. More preferably, the juice concentrate has a Brix of from 8 to 12 °Bx.

Lime juice with a juice content of 100 wt%, obtained from concentrate, has a Brix of 8 °Bx. A juice concentrate having a Brix of 12 °Bx corresponds to a juice content of 150 wt%.

Concentrations below 5 °Bx cause the formation of undesired off-flavoured compounds. Higher concentrations above 20 °Bx also cause the formation of undesired off-flavoured compounds and furthermore inhibit the fermentation process.

In a preferred embodiment in combination with any of the embodiments described above or below, the juice concentrate has a low pH, such as <4, preferably <3, more preferably <2.5. In particular, the juice concentrates is selected from lime juice or lemon juice, especially lime juice.

Common yeasts, which are used for the fermentation of food products and beverages are Ascomycota. Preferably, alcohol-forming yeasts are used, e.g. yeasts of the genus Saccharomyces, Kloeckera, and Pichia. Examples of such yeasts are Saccharomyces cerevisiae, Saccharomyces bayanus, and Kloeckera apiculata.

In another preferred embodiment in combination with any of the embodiments described above or below, dry yeast is used.

In a further preferred embodiment in combination with any of the embodiments described above or below, the yeast is selected from Saccharomyces, more preferably Saccharomyces cerevisiae or Saccharomyces bayanus, in particular Saccharomyces cerevisiae.

In another preferred embodiment in combination with any of the embodiments described above or below, the yeast is added at an amount of 0.01 to 0.1 wt%, based on the total weight of the mixture, more preferably in an amount of 0.015 to 0.07 wt%, in particular 0.02 wt%.

Yeast can be further characterized by its CFU. The term "CFU" refers to colony-forming unit and is an estimate of viable bacterial and fungal numbers and is usually given in CFU/mL or CFU/g.

In a further preferred embodiment in combination with any of the embodiments described above or below, the mixture comprises a dry yeast having a CFU of $1 \times 10^{10}$ CFU/kg. The yeast is preferably present in an amount of 1 x

$10^9$ CFU/kg to 1 x $10^{10}$ CFU/kg, more preferably in an amount of 1.5 x $10^9$ CFU/kg to 7 x $10^9$ CFU/kg, in particular 2 x $10^9$ CFU/kg. The density of the mixture (fermentate) of the present invention is approximately 1 g/mL. Thus, 2 x $10^9$ CFU/kg corresponds to 2 x $10^9$ CFU/L and 2 x $10^6$ CFU/mL.

If the amount of yeast is in this range, the desired aromatic compounds are formed without the formation of off-flavored compounds.

The treatment of the juice concentrate with the yeast in the process according to the present invention is carried out at temperatures above 25 °C, more preferably at a temperature of from 25 to 35 °C, in particular at a temperature of from 28 to 32 °C.

In a further preferred embodiment in combination with any of the embodiments described above or below, the treatment in the process according to the present invention is carried out for 24 to 50 hours.

In another preferred embodiment in combination with any of the embodiments described above or below, the fermentation is carried out at a pH of < 2.5 and at a temperature of 28 to 32 °C for 24 to 50 h.

Preferably, the fermentation is stopped when the desired aromatic compounds have been formed and the alcohol content is low.

In a further preferred embodiment in combination with any of the embodiments described above or below, the reaction batch is not agitated and not aerated during fermentation. More preferably, oxygen is excluded in the process of the present invention to avoid oxidation.

In a further preferred embodiment in combination with any of the embodiments described above or below, the fermentation is stopped by heat treatment at a temperature of 80 to 90 °C for 30 to 60 seconds, when the desired aromatic compounds have been formed and the alcohol content is low. The solids can be removed from the concentrated liquid foodstuff by common procedures known to the person skilled in the art, e.g. by filtration.

Yeasts, such as Saccharomyces cerevisiae, ferment carbohydrates, preferably hexoses. In many juice concentrates, in particular in citrus fruits, hexoses are present only in small amounts. An addition of carbohydrates, preferably hexoses, may therefore helpful for starting the fermentation.

Suitable carbohydrates include maltose, lactose, glucose, saccharose, fructose, hydrolyzed saccharose concentrate, invert sugar syrup, glucose syrup, natural fruit sugar from fruit juice, fruit juice concentrate (e.g. Fruit-up®, apple juice concentrate, grape juice concentrate), honey, maple syrup, and pale malt. In a preferred embodiment in combination with any of the embodiments described above or below, the carbohydrate is selected from glucose, lactose, saccharose, and fructose of which glucose is most preferable.

In a preferred embodiment in combination with any of the embodiments described above or below, the carbohydrate is not or only slightly colored and does not have a taste of its own. Sugar syrups, such as invert sugar syrup and glucose syrup are preferred, since the hexoses therein are free and therefore easily available. Furthermore, said syrups do not influence the color and do not have a distinguished taste.

In another preferred embodiment in combination with any of the embodiments described above or below, the carbohydrate is added in an amount of from 1 to 20 wt%, based on the total weight of the mixture, more preferably in an amount of from 2 to 10 wt%, in particular from 3 to 5 wt%.

In a further preferred embodiment in combination with any of the embodiments described above or below, the yeast is added in activated form. For the activation, the yeast is suspended in degassed water having a temperature of from 30 to 40 °C in an amount to obtain a suspension with 5 wt% of yeast ($\hat{=}$ 5 x $10^8$ CFU/mL). The suspension is allowed to stand for 10 to 20 min at 30 to 40 °C and is afterwards stirred vigorously for approximately 15 min in order to completely dissolve the yeast and to obtain an aeration of the suspension.

In a further preferred embodiment in combination with any of the embodiments described above or below, the above-described activated yeast suspension is added to the juice concentrate and carbohydrate. Preferably, the starting concentration is in the range of 0.1 to 0.3 g of dry yeast per 1 L of reaction batch, i.e. 1 to 3 x $10^6$ CFU/mL of reaction batch.

In a further preferred embodiment in combination with any of the embodiments described above or below, the reaction batch is pasteurized before fermentation.

In another preferred embodiment in combination with any of the embodiments described above or below, the solids are removed after fermentation, e.g. by filtration or centrifugation. The removal of the solids increases the sensory stability of the resulting foodstuff.

It is well-known that during fermentation with yeasts esters and other aromatic components are formed. The amounts of the so-formed compounds depend on the yeast and the fermentation conditions.

In the present invention, the fermentation process is carried out under the described conditions in order to form the desired aromatic compounds. The fermentation conditions are therefore modified to obtain a foodstuff having the desired taste and a low amount of alcohol. In particular, the fermentation conditions do not fall under the usual optimum conditions of the yeast. For instance, the optimum fermentation temperature for Saccharomyces cerevisiae (SIHA 3) for conversion of sugar into alcohol is in the range of 15 to 22 °C, whereas in a preferred embodiment of the present invention the fermentation temperature is above 25 °C, more preferably in the range of 28 to 32 °C.

Similarly, the fermentation is carried out at a pH < 4, in particular pH <2.5. The pH optimum of Saccharomyces cerevisiae is usually in the range of pH 5 to 6.

In a preferred embodiment in combination with any of the embodiments described above or below, the alcohol content of the concentrated liquid foodstuff is lower than 10 g/kg.

According to the invention, the mixture has a total acidity of at least 25 g/L, calculated as citric acid, pH 8.1, more preferably 38 g/L, in particular 50 g/L. The ratio of total carbohydrate to total acidity is preferably less than 8, more preferably less than 5, in particular less than 3.

The term "total carbohydrate" according to the present invention corresponds to the carbohydrate, which is added, and the natural carbohydrate, which is already present in the fruit juice concentrate as such. Thus, the total carbohydrate is defined as follows:

$$\text{Total carbohydrate} = \text{natural carbohydrate} + \text{added carbohydrate.}$$

The total acidity of the mixture is determined as titratable acidity according to the procedure described in "Determination of titratable acidity: No 3, 168 in: The Collection of Analyses of the International Federation of Fruit Juice Producers (IFU), loose-leaf edition 1991, Zug, Swiss Fruit Unit.

The titratable acidity is determined by potentiometric titration with standard volumetric sodium hydroxide solution to a pH-value of 8.1.

25 mL of the mixture ($V_0$) are transferred at 20 °C in a beaker. The mixture is stirred and titrated by means of a burette with sodium hydroxide solution until a pH of 8.1 is obtained. The amount of sodium hydroxide solution used is recorded ($V_1$).

The titratable acidity $C_{H+}$ expressed in mM of H$^+$ per liter of product is given by the formula:

$$C_{H+} = (1000 \times V_1 \times c)/ V_0$$

where

$V_0$ is the volume, in mL, of the sample;
$V_1$ is the volume, in mL, of the sodium hydroxide solution used;
c is the exact concentration, in M/L, of the sodium hydroxide solution.

It is also possible to calculate the titratable acidity as content of a particular acid expressed in g/L of product, by multiplying the result from the formula above by a factor corresponding to the acid.

Factors corresponding to different acids:

Tartaric acid:          0.075
Malic acid:             0.067
Citric acid, anhydrous:  0.064.

The titratable acidity as content of a particular acid expressed in g/kg of product, can be determined in the same manner as described above by titrating 10 g of the sample with a sodium hydroxide solution until a pH of 8.1 is obtained.

The acidity calculated as citric acid at pH 8.1 in g/kg can be determined as follows:
1 mL of 1 N NaOH used in the titration corresponds to 0.064 g of citric acid.

Therefore, when titrating 10 g of the sample with 1 N NaOH, the amount of NaOH in mL has to be multiplied by 6.4 to obtain the acidity in g/kg.

The acidity of the fruit juice concentrate can be determined accordingly by using a sample of the fruit juice concentrate.

Preferably, the mixture treated in the process according to the present invention may have the following characteristics:

|  | lime | Black currant | Pink grapefruit |
|---|---|---|---|
| Total Brix [°Bx] | 13 | 20 | 20 |
| added carbohydrate [g/kg]; (added carbohydrate in g/L) | 47.5 (50) | 10 | 10 |

(continued)

|  | lime | Black currant | Pink grapefruit |
|---|---|---|---|
| total carbohydrate [g/kg] | 50.7 | 121.7 | 145.4 |
| total acidity, calculated as citric acid, pH 8.1 [g/kg] (total acidity in g/L) | 52.7 (55.5) | 45.9 (49.7) | 27.6 (29.8) |
| Ratio total carbohydrate/total acidity | 1.0 | 2.7 | 5.3 |

According to the process of the present invention, a juice concentrate with a high acidity can be treated. Preferably, the juice concentrate has a high acidity itself and no further acid is added. In an alternative embodiment in combination with any of the embodiments described above or below, an acid, e.g. citric acid, tartaric acid, malic acid, lactic acid, acetic acid, may be added.

Moreover, in relation to the acidity only small amounts of carbohydrates are added.

When preparing a concentrated liquid foodstuff according to the process of the present invention, the formation of alcohol is inhibited and the formation of the desired aromatic compound is maximized.

In another preferred embodiment in combination with any of the embodiments described above or below, the ready-to-drink composition contains less than 1.5 g of alcohol per 1 L of ready-to-drink composition.

The ready-to-drink composition may be carbonated.

The diluent in the ready-to-drink composition may be water. More preferably, the diluent is carbonated water.

The ready-to-drink composition may comprise sweetening agents, more preferably natural sweetening agents, fruit juice concentrate (e.g. Fruit-up®, apple juice concentrate, grape juice concentrate), and Stevia.

Preferably, the ready-to-drink composition contains 40 g/L of Fruit-up®, 0.2 g/L of Stevia, 75 g/L of the concentrated liquid foodstuff obtained according to the process of the present invention and carbonated or non-carbonated water.

Surprisingly, the ready-to-drink composition has a pleasant new flavor note.

The following examples describe specific embodiments of the present invention.

**Examples**

Example 1:

Fermentation of lime juice

To 930 g of lime juice concentrate (having a Brix of 50 °Bx) diluted with water to 8.6 °Bx 70 g of invert sugar syrup having a Brix of 71.5 °Bx is added to obtain 1 L of a mixture having 8 °Bx of the juice concentrate and 5 °Bx of the invert sugar syrup, i.e. the total Brix is 13 °Bx. The mixture has a total acidity calculated as citric acid, pH 8.1, of 52.7 g/kg (55.5 g/L) and a total sugar/total acidity ratio of 0.9.

To 2.5 g of Saccharomcyes cerevisiae degassed water having a temperature of 34 °C is added to obtain a suspension with a concentration of 5 wt% of yeast ($5 \times 10^8$ CFU/mL). The suspension is allowed to stand for 15 min at 34 °C and is afterwards vigorously stirred for additional 15 min to activate the yeast. To the mixture of lime juice and sugar the activated yeast is added in an amount of 4 g/kg. The fermentation is carried out at 30 °C for 48 h in the absence of oxygen. The fermentation is stopped by heating the mixture to 85 °C for 40 seconds. The solids are removed by filtration (Pall Seitz k100 Filter Sheets, Fine Particle Retention 1-4 μm).

The resulting fermented product has an alcohol content of 10 to 15 g/kg and a Brix of 11.5 °Bx.

The fermented product is diluted with carbonated water and crystal sugar is added. The resulting beverage contained 7.5 wt% of the fermented product and 9 wt% of crystal sugar, based on the total weight of the beverage. The alcohol content of the beverage is therefore 0.75 to 1.125 g/L.

Reference Example:

A reference drink is formed by mixing carbonated water, crystal sugar and the non-fermented lime concentrate having 8 °Bx of the juice concentrate and 5 °Bx of invert sugar syrup in the same manner as described in Example 1. The resulting drink contained 7.5 wt% of the non-fermented product and 9 wt% of crystal sugar, based on the total weight of the beverage.

In a Forced Choice Test with 10 test persons the beverage and the reference drink was presented to the test persons. The beverage of Example 1 was preferred by all test persons.

Example 2 (not according to the invention):

Fermentation of black currant juice

292.3 g of black currant juice concentrate having a Brix of 65 °Bx, a natural sugar content of 382 g/kg and an acidity of 157 g/kg calculated as citric acid, pH 8.1, and 10 g of dextrose having a sugar content of 995 g/kg, are diluted with water to obtain 1 kg of a mixture having a total Brix of 20 °Bx, a total acidity calculated as citric acid, pH 8.1, of 45.9 g/kg and a total sugar/total acidity ratio of 2.65.
To 2.5 g of Saccharomcyes cerevisiae degassed water having a temperature of 34 °C is added to obtain a suspension with a concentration of 5 wt% of yeast ($5 \times 10^8$ CFU/mL). The suspension is allowed to stand for 15 min at 34 °C and is afterwards vigorously stirred for additional 15 min to activate the yeast. To the mixture of black currant juice and sugar the activated yeast is added in an amount of 4 g/kg. The fermentation is carried out at 30 °C for 48 h in the absence of oxygen. The fermentation is stopped by heating the mixture to 85 °C for 40 seconds. The solids are removed by filtration (Pall Seitz k100 Filter Sheets, Fine Particle Retention 1-4 $\mu$m).
The resulting fermented product has an alcohol content of 10 to 15 g/kg and a Brix of 18.2 °Bx.
The fermented product is diluted with carbonated water and crystal sugar is added. The resulting beverage contained 5.6 wt% of the fermented product and 9 wt% crystal sugar. The alcohol content is therefore < 1 g/L.

Example 3 (not according to the invention):

Fermentation of Pink Grapefruit

316.7 g of pink grapefruit juice concentrate having a Brix of 60 °Bx, a natural sugar content of 427.5 g/kg and an acidity of 87 g/L calculated as citric acid, pH 8.1, and 10 g of dextrose having a sugar content of 995 g/kg, are diluted with water to obtain 1 kg of a mixture having a total Brix of 20 °Bx, a total acidity calculated as citric acid, pH 8.1, of 27.6 g/kg and a total sugar/total acidity ratio of 5.3.
To 2.5 g of Saccharomcyes cerevisiae degassed water having a temperature of 34 °C is added to obtain a suspension with a concentration of 5 wt% of yeast ($5 \times 10^8$ CFU/mL). The suspension is allowed to stand for 15 min at 34 °C and is afterwards vigorously stirred for additional 15 min to activate the yeast. To the mixture of pink grapefruit juice and sugar the activated yeast is added in an amount of 4 g/kg. The fermentation is carried out at 30 °C for 48 h in the absence of oxygen. The fermentation is stopped by heating the mixture to 85 °C for 40 seconds. The solids are removed by filtration (Pall Seitz k100 Filter Sheets, Fine Particle Retention 1-4 $\mu$m).
The resulting fermented product has an alcohol content of 10 to 15 g/kg and a Brix of 18.2 °Bx.
The fermented product is diluted with carbonated water and crystal sugar is added. The resulting beverage contained 5.6 wt% of the fermented product and 9 wt% crystal sugar. The alcohol content is therefore < 1 g/L.

**Claims**

1. A process of preparing a concentrated liquid foodstuff comprising treatin g a mixture of a juice concentrate and a carbohydrate with a yeast,
   wherein said juice concentrate has a water content of 20 to 80% by weight based on the juice concentrate and a Brix of from 5 to 20 °Bx,
   wherein said carbohydrate is selected from the group consisting of maltose, lactose, glucose, saccharose, fructose, hexose, a hydrolyzed saccharose concentrate, an invert sugar syrup, a glucose syrup, and a natural fruit sugar from fruit juice and fruit juice concentrate, and is added in an amount of from 1 to 20 wt%, based on the total weight of the mixture,
   wherein the mixture has a total acidity of at least 25 g/L, calculated as citric acid, pH 8.1, and
   wherein the treatment of the juice concentrate with the yeast is carried out at temperatures above 25 °C and wherein the fermentation is carried out at a pH < 4,
   to obtain a concentrated liquid foodstuff, wherein the alcohol content is lower than 15 g/kg of concentrated liquid foodstuff.

2. The process according to claim 1, **characterized in that** the juice concentrate has a Brix of from 6 to 16 °Bx.

3. The process according to claim 1 or 2, **characterized in that** the juice concentrate has a Brix of from 8 to 12 °Bx.

4. The process according to any of claims 1 to 3, **characterized in that** the yeast is selected from Saccharomyces.

5. The process according to claim 4, wherein the yeast is Saccharomyces cerevisiae or Saccharomyces bayanus.

6. The process according to claim 1, **characterized in that** the treatment of the juice concentrate with the yeast is carried out at temperatures of from 25 to 35 °C.

7. The process according to claim 1 or 6, **characterized in that** the treatment of the juice concentrate with the yeast is carried out at temperatures of from 28 to 32 °C.

8. The process according to any of claims 1 to 7, **characterized in that** the treatment is carried out for 24 to 50 h.

9. The process according to any of claims 1 to 8, **characterized in that** the juice concentrate has a pH of < 4.

10. The process according to any of claims 1 to 9, **characterized in that** the yeast is added in an amount of 0.01 to 0.1 wt%, based on the total weight of the mixture.

11. The process according to any one of claims 1 to 10, wherein the ratio of the total carbohydrate to total acidity is less than 8.


**Patentansprüche**

1. Verfahren zur Herstellung eines konzentrierten flüssigen Lebensmittels, umfassend
   Behandeln einer Mischung aus einem Saftkonzentrat und einem Kohlenhydrat mit einer Hefe,
   wobei das Saftkonzentrat einen Wassergehalt von 20 bis 80 Gew.-%, bezogen auf das Saftkonzentrat, und einen Brix von 5 bis 20 °Bx aufweist,
   wobei das Kohlenhydrat ausgewählt ist aus der Gruppe bestehend aus Maltose, Laktose, Glucose, Saccharose, Fructose, Hexose, einem hydrolysierten Saccharosekonzentrat, einem Invertzuckersirup, einem Glukosesirup und einem natürlichen Fruchtzucker aus Fruchtsaft und Fruchtsaftkonzentrat, und in einer Menge von 1 bis 20 Gew.-%, bezogen auf das Gesamtgewicht der Mischung, zugesetzt wird,
   wobei die Mischung eine gesamte Säure von mindestens 25 g/L aufweist, berechnet als Zitronensäure, pH 8,1 und wobei die Behandlung des Saftkonzentrats mit der Hefe bei Temperaturen über 25 °C durchgeführt wird und wobei die Fermentation bei einem pH < 4 durchgeführt wird,
   um ein konzentriertes flüssiges Lebensmittel zu erhalten, wobei der Alkoholgehalt niedriger als 15 g/kg konzentriertes flüssiges Lebensmittel ist.

2. Verfahren nach Anspruch 1, **dadurch gekennzeichnet, dass** das Saftkonzentrat einen Brix von 6 bis 16 °Bx aufweist.

3. Verfahren nach Anspruch 1 oder 2, **dadurch gekennzeichnet, dass** das Saftkonzentrat einen Brix von 8 bis 12 °Bx aufweist.

4. Verfahren nach einem der Ansprüche 1 bis 3, **dadurch gekennzeichnet, dass** die Hefe ausgewählt ist aus Saccharomyces.

5. Verfahren nach Anspruch 4, wobei die Hefe Saccharomyces cerevisiae oder Saccharomyces bayanus ist.

6. Verfahren nach Anspruch 1, **dadurch gekennzeichnet, dass** die Behandlung des Saftkonzentrats mit der Hefe bei Temperaturen von 25 bis 35 °C durchgeführt wird.

7. Verfahren nach Anspruch 1 oder 6, **dadurch gekennzeichnet, dass** die Behandlung des Saftkonzentrats mit der Hefe bei Temperaturen von 28 bis 32 °C durchgeführt wird.

8. Verfahren nach einem der Ansprüche 1 bis 7, **dadurch gekennzeichnet, dass** die Behandlung für 24 bis 50 h durchgeführt wird.

9. Verfahren nach einem der Ansprüche 1 bis 8, **dadurch gekennzeichnet, dass** das Saftkonzentrat einen pH < 4 aufweist.

10. Verfahren nach einem der Ansprüche 1 bis 9, **dadurch gekennzeichnet, dass** die Hefe in einer Menge von 0,01 bis 0,1 Gew.-%, bezogen auf das Gesamtgewicht der Mischung, zugegeben wird.

**11.** Verfahren nach einem der Ansprüche 1 bis 10, wobei das Verhältnis des gesamten Kohlenhydrats zur gesamten Säure weniger als 8 beträgt.

## Revendications

**1.** Procédé de préparation d'un produit alimentaire liquide concentré comprenant
le traitement d'un mélange d'un concentré de jus et d'un hydrate de carbone avec une levure,
où ledit concentré de jus présente une teneur en eau de 20 à 80 % en poids sur la base du concentré de jus et un Brix de 5 à 20°Bx,
où ledit hydrate de carbone est sélectionné dans le groupe constitué du maltose, lactose, glucose, saccharose, fructose, hexose, d'un concentré de saccharose hydrolysé, d'un sirop de sucre inverti, d'un sirop de glucose, et d'un sucre de fruit naturel provenant de jus de fruit et de concentré de jus de fruit, et est ajouté en une quantité de 1 à 20 % en pds, sur la base du poids total du mélange,
le mélange ayant une acidité totale d'au moins 25 g/l, calculée en acide citrique, pH 8,1, et
où le traitement du concentré de jus avec la levure est effectué à des températures supérieures à 25°C et la fermentation étant exécutée au pH < 4,
pour obtenir un produit alimentaire liquide concentré, où la teneur en alcool est inférieure à 15 g/kg de produit alimentaire liquide concentré.

**2.** Procédé selon la revendication 1, **caractérisé en ce que** le concentré de jus présente un Brix de 6 à 16°Bx.

**3.** Procédé selon la revendication 1 ou 2, **caractérisé en ce que** le concentré de jus présente un Brix de 8 à 12°Bx.

**4.** Procédé selon l'une quelconque des revendications 1 à 3, **caractérisé en ce que** la levure est sélectionnée dans le genre *Saccharomyces*.

**5.** Procédé selon la revendication 4, dans lequel la levure est *Saccharomyces cerevisiae* ou *Saccharomyces bayanus*.

**6.** Procédé selon la revendication 1, **caractérisé en ce que** le traitement du concentré de jus avec la levure est effectué à des températures de 25 à 35°C.

**7.** Procédé selon la revendication 1 ou 6, **caractérisé en ce que** le traitement du concentré de jus avec la levure est effectué à des températures de 28 à 32°C.

**8.** Procédé selon l'une quelconque des revendications 1 à 7, **caractérisé en ce que** le traitement est effectué durant 24 à 50 h.

**9.** Procédé selon l'une quelconque des revendications 1 à 8, **caractérisé en ce que** le concentré de jus présente un pH < 4.

**10.** Procédé selon l'une quelconque des revendications 1 à 9, **caractérisé en ce que** la levure est ajoutée en une quantité de 0,01 à 0,1 % en pds, sur la base du poids total du mélange.

**11.** Procédé selon l'une quelconque des revendications 1 à 10, dans lequel le rapport de l'hydrate de carbone total à l'acidité totale est inférieur à 8.

Figure 1:

Figure 2:

Figure 3:

**EP 2 922 417 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4695468 A
- IT 1264292
- JP 2001190251 A
- US 3120441 A

**Non-patent literature cited in the description**

- Determination of titratable acidity. The Collection of Analyses of the International Federation of Fruit Juice Producers (IFU). 1991, 168